# EUROPEAN PATENT SPECIFICATION

(11) **EP 0 894 976 B1**
(45) Date of publication and mention of the grant of the patent: **14.09.2005**
(21) Application number: 98114217.7
(22) Date of filing: 29.07.1998
(51) Int. Cl.: F02P 19/02, F02P 17/12, F02D 41/22

(54) **Combustion state detector for an internal combustion engine**
Erfassung des Verbrennungszustandes für ein Brennkraftmaschine
Détection de l'état de combustion d'un moteur à combustion interne

(30) Priority: 30.07.1997 JP 20455697
(43) Date of publication of application: 03.02.1999
(73) Proprietor: Toyota Jidosha Kabushiki Kaisha, Toyota-shi, Aichi-ken 471-8571 (JP)
(72) Inventor: Sugiyama, Tatsumasa, Toyota-shi, Aichi-ken, 471-8571 (JP)
(74) Representative: TBK-Patent

(56) References cited:
- EP-A- 0 305 347
- DE-A- 2 802 196
- US-A- 3 942 102
- US-A- 4 024 469
- US-A- 5 180 984
- PATENT ABSTRACTS OF JAPAN vol. 1997, no. 06, 30 June 1997 (1997-06-30) & JP 09 042136 A (NIPPON SOKEN INC;DENSO CORP), 10 February 1997 (1997-02-10)
- PATENT ABSTRACTS OF JAPAN vol. 016, no. 399 (M-1300), 24 August 1992 (1992-08-24) & JP 04 134179 A (YAMAHA MOTOR CO LTD), 8 May 1992 (1992-05-08) & US 5 724 938 A (YAMADA) 10 March 1998 (1998-03-10)
- PATENT ABSTRACTS OF JAPAN vol. 1997, no. 07, 31 July 1997 (1997-07-31) & JP 09 088795 A (FUTABA CORP), 31 March 1997 (1997-03-31)
- PATENT ABSTRACTS OF JAPAN vol. 017, no. 041 (M-1359), 26 January 1993 (1993-01-26) & JP 04 259671 A (MITSUBISHI ELECTRIC CORP), 16 September 1992 (1992-09-16)

## Description

### BACKGROUND OF THE INVENTION

### 1. Field of the Invention

The present invention relates to a combustion state detector for an internal combustion engine, and more particularly to an apparatus which causes an ion current to be generated from ions which are generated when combustion of fuel takes place in a combustion chamber so as to detect a state of combustion in accordance with the ion current.

### 2. Description of the Related Art

In general, a diesel engine arranged to be mounted on a vehicle has a cylinder block which includes a plurality of pistons permitted to perform reciprocative movement. The pistons connected to a crank shaft of the diesel engine through corresponding connecting rods. The reciprocative movements of the piston are converted into revolutions of the crank shaft by the connecting rod. A cylinder head is joined to the cylinder block so that a combustion chamber is formed between the cylinder head and the head portion of each piston. Moreover, the cylinder head has a suction passage and an exhaust passage, which are allowed to communicate with each combustion chamber, and a plurality of fuel injection valves for injecting fuel to the corresponding combustion chambers.

In the suction stroke in the diesel engine, air is sucked into the combustion chamber through the suction passage. In a compression stroke in the diesel engine which is performed after the suction stroke, air in the combustion chamber is compressed because of the movement of the piston. Moreover, atomized fuel is injected from the fuel injection valve into the combustion chamber in the final stage of the compression stroke. Then, fuel self-ignites and burns because of heat of compression. Combustion of fuel causes the piston to be moved in a direction opposite to that in the foregoing stroke so that the combustion stroke of the diesel engine is started. In the exhaust stroke of the diesel engine, the movement of the piston causes exhaust gas in the combustion chamber to be discharged to the outside through the exhaust passage.

In the diesel engine having the above-mentioned structure, a state of combustion in the combustion chamber such as the fuel igniting timing and duration of ignition varies when the fuel injection timing from the fuel injection valve and injection duration are changed. Therefore, when the fuel injection timing and the fuel injection duration are controlled, the state of the combustion in the combustion chamber, such as the fuel igniting timing and the ignition duration, can be optimized. As an example of an apparatus for controlling the state of combustion in the diesel engine, a fuel-injection-timing control unit disclosed in, for example, Japanese Patent Laid-Open No. 59-10046, is known.

The fuel-injection-timing control unit disclosed as described above incorporates a glow plug also having a function to serve as an ion-current detector. The glow plug has an electrode portion allowed to appear in the combustion chamber of the diesel engine and insulated from the inner wall of the combustion chamber. When ions are generated in the combustion chamber because of combustion of fuel, the ions cause an ion current to flow between the electrode portion of the glow plug and the inner wall of the combustion chamber. The glow plug is arranged to detect the ion current so as to transmit a detection signal corresponding to the amount of the electric current.

The fuel-injection-timing control unit incorporates a crank-position sensor which detects a projection or the like provided for the crank shaft of the diesel engine so as to transmit a detection signal. The foregoing crank-position transmits the detection signal formed into pulses whenever the crank shaft is revolved.

The above-mentioned unit is arranged to determine the fuel ignition timing in the combustion chamber in response to the detection signals supplied from the glow plug and the crank-position sensor. Moreover, the unit controls the fuel injection valve to optimize the ignition timing in that the fuel injection timing is adjusted. Since the fuel injection timing is controlled as described above, a satisfactory combustion state is maintained in the combustion chamber. Thus, the state of drive of the diesel engine can be stabilized.

The above-mentioned diesel engine sometimes encounters adhesion of carbon, which has been generated because of the combustion of fuel in the combustion chamber, to the electrode portion of the glow plug. In this case, a leakage current flows between the electrode portion and the inner wall of the combustion chamber through the carbon allowed to adhere to the electrode portion. What is worse, the leakage current is erroneously detected as an ion current. As a result, the ignition timing obtained in response to the detection signals supplied from the glow plug and the crank-position sensor becomes an erroneous value. If the erroneous ignition timing is obtained, the fuel injection timing controlled in accordance with the ignition timing becomes improper timing. As a result, a satisfactory combustion state of the diesel engine cannot be maintained.

Further, PATENT ABSTRACTS OF JAPAN vol. 1997, no. 06, 30 June 1997 (1997-06-30) & JP 09 042136 A (Nippon Soken Inc.; Denso Corp, claim 1), 10 February 1997 (1997-02-10) describes cleaning of a ion current sensor in the combustion chamber of an internal combustion engine by heating of the sensor and thus burning off carbon.

### SUMMARY OF THE INVENTION

In view of the foregoing, an object of the present invention is to provide a combustion state detector for an internal combustion engine which is capable of accurately detecting a combustion state in a combustion chamber, such as fuel ignition timing and a ignition period.

The above object is solved by the combination of features of claim 1. The dependent claims disclose further advantageous embodiments of the invention.

To achieve the above-mentioned object, according to the present invention, there is provided a combustion state detector for an internal combustion engine incorporating an electrode portion allowed to appear in a combustion chamber of an internal combustion engine and ion-current detection means for detecting an ion current generated by dint of ions generated because of combustion in a combustion chamber so that a combustion state in the combustion chamber is detected in accordance with the ion current detected by the ion-current detection means, the combustion state detector for an internal combustion engine comprising: carbon removal means adapted to control a removing of carbon allowed to adhere to the electrode portion of the ion-current detection means, wherein limiting means for limiting detection of the ion current are provided which is performed by the ion-current detection means a predetermined time after carbon has been removed by the carbon removal means.

The above-mentioned structure causes the carbon removal means to remove carbon allowed to adhere to the electrode portion of the ion-current detection means. Therefore, erroneous detection of a leakage current, which flows through carbon, as an ion current can be prevented. Therefore, the fuel combustion state in the combustion chamber can be more accurately detected in synchronization with the ion current detected by the ion-current detection means.

However, even if carbon is removed, carbon is gradually allowed to adhere to the electrode portion of the ion-current detection means because of injection of fuel. The above-mentioned structure is formed such that the detection of an ion current which is performed by the ion-current detection means is limited to predetermined time after carbon has been removed. Therefore, erroneous detection of a leakage current generated by dint of carbon allowed to adhere to the electrode portion from which carbon has been removed as an ion current can satisfactorily be prevented.

According to an aspect of the present invention, the carbon removal means may heat and remove carbon allowed to adhere to the electrode portion.

The foregoing structure is formed such that when the carbon removal means heats carbon allowed to adhere to the electrode portion of the ion-current detection means, carbon allowed to adhere to the electrode portion is formed into carbon dioxide and removed from the electrode portion. Therefore, removal of carbon from the electrode portion can furthermore completely be performed.

According to a further aspect of the present invention, the carbon removal means may cause the electrode portion to be heated so that carbon is heated and removed.

The above-mentioned structure is formed such that heating of carbon allowed to adhere to the electrode portion is performed when the electrode portion is heated by the carbon removal means. Therefore, carbon can furthermore efficiently be heated and removed.

According to a still further aspect of the present invention, the carbon removal means may be adapted to remove carbon allowed to adhere to the electrode portion of the ion-current detection means when the ion-current detection means has detected an electric current in a state in which supply of fuel to the internal combustion engine is interrupted.

The above-mentioned structure is formed such that only when an electric current is detected by the ion-current detection means in a case in which fuel supply to the internal combustion engine is interrupted and in which thus an ion current is not to be detected by the ion-current detection means, carbon allowed to adhere to the electrode portion is removed by the carbon removal means. Therefore, excessive removal of carbon from the electrode portion which is performed by the carbon removal means can be prevented. Thus, premature deterioration of the electrode portion can be prevented.

If a failure of the ion-current detection means occurs, a state is sometimes realized in which an electric current of some kind is detected by the ion-current detection means though the carbon removal means has been operated in a state in which fuel supply to the internal combustion engine is interrupted. Therefore, failure determination means may be provided for making a determination that a failure of the ion-current detection means occurs when an electric current of some kind is detected by the ion-current detection means although the carbon removal means has been operated in a state where fuel supply to the internal combustion engine is interrupted.

### BRIEF DESCRIPTION OF THE DRAWINGS

Fig. 1 is a schematic view showing the overall body of a diesel engine to which a combustion state detector according to a first embodiment of the present invention is applied;
Fig. 2 is an enlarged cross sectional view showing a fuel injection structure of the engine shown in Fig. 1;
Fig. 3 is a block diagram showing an electrical structure of the combustion state detector according to the first embodiment;
Fig. 4 is a flow chart showing a procedure for obtaining correction values relating to the fuel injection according to the first embodiment;
Fig. 5 is a flow chart showing a carbon removal process and a process for determining a failure of a glow plug according to a second embodiment of the present invention;
Fig. 6 is a flow chart of a process according to a second embodiment for storing time at which generation of an ion current has been started and time at which generation has been completed; and
Fig. 7 is a flow chart of a process for obtaining correction values relating to fuel injection according to the second embodiment.

### DESCRIPTION OF THE PREFERRED EMBODIMENT

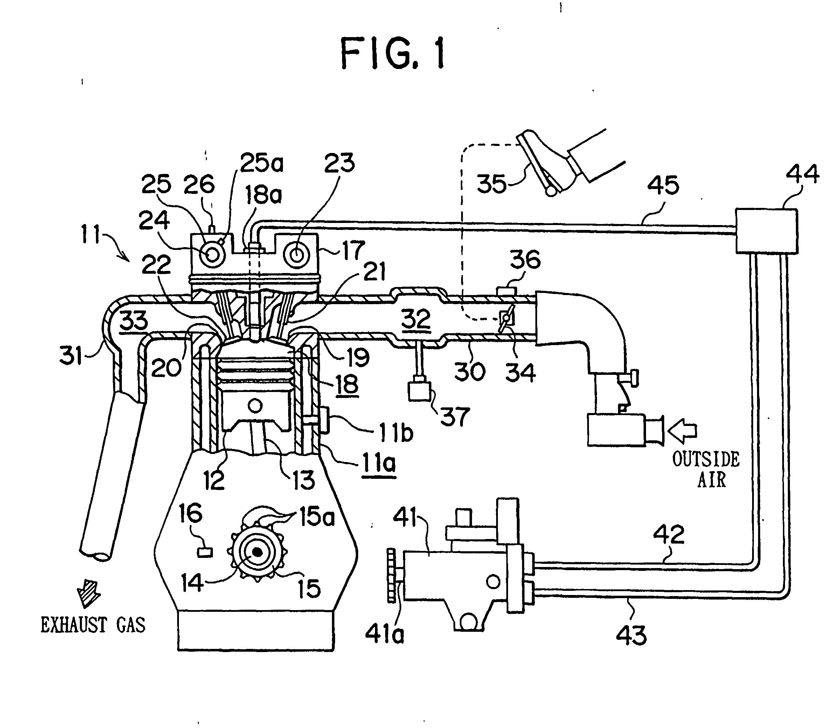

A first embodiment structured such that the present invention is applied to a diesel engine of a vehicle will now be described with reference to Figs. 1 to 4.

As shown in Fig. 1, a cylinder block 11a of a diesel engine 11 has four pistons 12 (only one is shown in Fig. 1), reciprocating movements of which are permitted. Each piston 12 is, through a connecting rod 13, connected to a crank shaft (an output shaft) 14 disposed in the lower portion of the diesel engine 11. The reciprocating movements of the pistons 12 are converted into revolutions of the crank shaft 14 by the connecting rod 13.

A crank-side signal rotor 15 is joined to the crank shaft 14. A plurality of projections 15a are formed on the outer surface of the crank-side signal rotor 15 at the same angular intervals around the axial line of the crank shaft 14. A crank sensor 16 for detecting the projection 15a of the crank-side signal rotor 15 to transmit a detection signal is disposed beside the crank-side signal rotor 15. When the crank shaft 14 is revolved, the projections 15a of the crank-side signal rotor 15 sequentially pass close by the crank sensor 16. Thus, pulse-shape detection signals are transmitted from the crank sensor 16.

The cylinder block 11a is provided with a water temperature sensor 11b for detecting the temperature of cooling water in the diesel engine 11. Moreover, a cylinder head 17 is disposed at the top end of the cylinder block 11a. A combustion chamber 18 is formed between the cylinder head 17 and the piston 12. The cylinder head 17 is provided with a fuel injection valve 18a for injecting fuel into the combustion chamber 18. Moreover, the cylinder head 17 has the combustion chamber 18 and an exhaust port 20 allowed to communicate with the combustion chamber 18. The suction port 19 has a suction valve 21, while the exhaust port 20 has an exhaust valve 22.

A suction cam shaft 23 and an exhaust cam shaft 24 for opening/closing the corresponding suction valve 21 and the exhaust valve 22 are rotatively supported by the cylinder head 17. The suction and exhaust cam shafts 23, 24 are connected to the crank shaft 14 through a timing belt (not shown). The timing belt transmits the revolutions of the crank shaft 14 to the suction and exhaust cam shafts 23, 24. When the suction cam shaft 23 is revolved, the suction valve 21 is opened/closed so that the communication between the combustion chamber 18 and the suction port 19 is established/interrupted. When the exhaust cam shaft 24 is revolved, the exhaust valve 22 is opened/closed so that the communication between the 18 and the exhaust port 20 is established/interrupted.

A cam-side signal rotor 25 is joined to the exhaust cam shaft 24. One projection 25a is formed on the outer surface of the cam-side signal rotor 25. A cam sensor 26 for detecting the projection 25a of the cam-side signal rotor 25 so as to transmit a detection signal is disposed beside the cam-side signal rotor 25. When the exhaust cam shaft 24 is revolved, the projection 25a of the cam-side signal rotor 25 passes close by the cam sensor 26 at predetermined intervals. Thus, detection signals are transmitted at predetermined intervals.

A suction pipe 30 is connected to the suction port 19, while an exhaust pipe 31 is connected to the exhaust port 20. The inside portions of the suction pipe 30 and the suction port 19 are formed into a suction passage 32, while the inside portions of the exhaust pipe 31 and the exhaust port 20 are formed into an exhaust passage 33. A throttle valve 34 is disposed upstream of the suction passage 32. The degree of opening of the throttle valve 34 is adjusted in accordance with the amount of depression (the degree of opening by means of an accelerator pedal) of an accelerator pedal 35 disposed in the interior of the automobile. When the degree of opening of the throttle valve 34 is adjusted, the amount of air which is sucked into the combustion chamber 18 is adjusted.

A throttle sensor 36 is disposed adjacent to the throttle valve 34. The throttle sensor 36 detects the degree of opening of the throttle valve 34 so as to transmit a detection signal corresponding to the detected degree of opening of the throttle valve 34. In the suction pipe 30, a suction-pressure sensor 37 is disposed downstream of the throttle valve 34. The suction-pressure sensor 37 detects the pressure in the suction passage 32 formed downstream of the throttle valve 34 so as to transmit a detection signal corresponding to the detected pressure.

On the other hand, the crank shaft 14 of the diesel engine 11 is connected to a drive shaft 41a of a fuel injection pump 41. A pair of supply pipes 42, 43 are connected to the fuel injection pump 41. The supply pipes 42, 43 are connected to a common rail 44. A fuel line 45 connected to the fuel injection valve 18a is connected to the common rail 44.

When the revolutions of the crank shaft 14 are transmitted to a drive shaft 41a of the fuel injection pump 41, the fuel injection pump 41 sucks fuel in a fuel tank (not shown). Fuel sucked from the fuel tank by the fuel injection pump 41 is, through the supply pipes 42, 43, supplied into the common rail 44. Fuel accumulated in the common rail 44 is, through the fuel line 45, supplied to the fuel injection valve 18a. Then, fuel is, from the fuel injection valve 18a, injected into the combustion chamber 18 of the diesel engine 11.

The above-mentioned process for injecting fuel into the combustion chamber 18 is performed in the final stage of the compression stroke of the diesel engine 11. Fuel injected into the combustion chamber 18 in the final stage of the compression stroke is self-ignited by the compression heat of air and is burnt. The combustion of fuel causes the diesel engine 11 to obtain drive force. Exhaust gas generated because of the combustion of fuel is discharged to the outside through the exhaust passage 33.

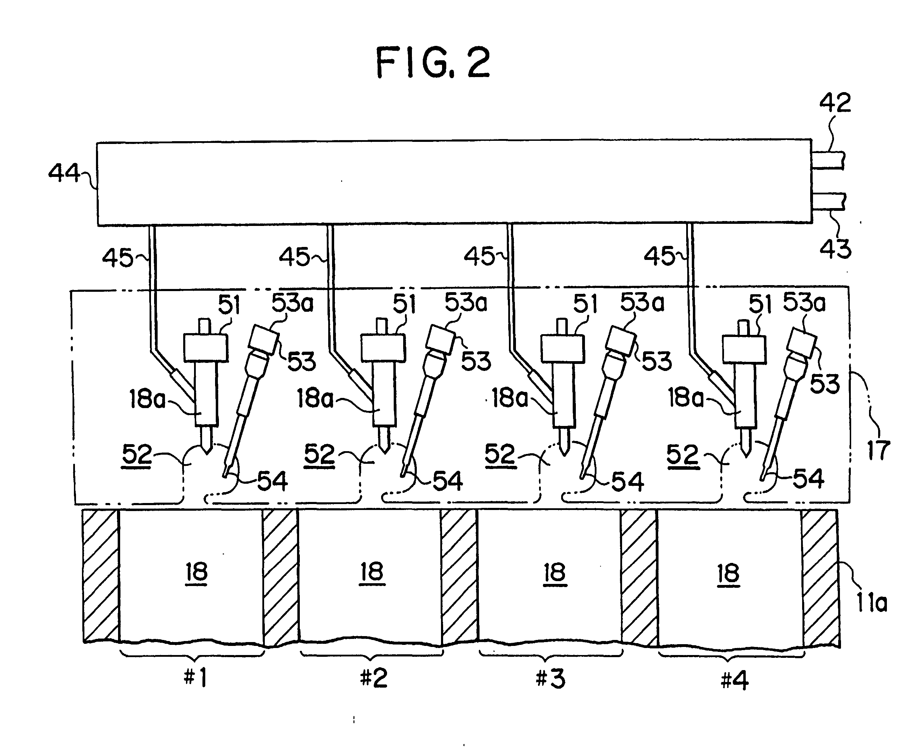

The structure of the diesel engine 11 for injecting fuel will now be described with reference to Fig. 2.

As shown in Fig. 2, four cylinders #1 to #4 are formed in the cylinder block 11a. The combustion chambers 18 and the fuel injection valves 18a correspond to the four cylinders #1 to #4. Vortex chambers 52 communicated with the combustion chambers 18 and forming portions of the combustion chambers 18 are provided for the cylinder head 17 at positions corresponding to the combustion chambers 18.

An electromagnetic solenoid 51 is provided for each of the fuel injection valves 18a. When the electromagnetic solenoid 51 is magnetized/demagnetized, a needle (not shown) of the fuel injection valve 18a performs an opening/closing operation. When the needle performs the opening/closing operation, fuel is intermittently injected from the fuel injection valve 18a. Thus, the fuel injection valve 18a injects fuel into the vortex chamber 52. Fuel is supplied from the vortex chamber 52 to the combustion chamber 18 while fuel is being burnt.

Glow plugs 53 are provided for the cylinder head 17 at positions corresponding to the vortex chambers 52. A heater 54 having conductivity is disposed at the leading end of the glow plug 53. The heater 54 is allowed to appear in the vortex chamber 52 and insulated from the inner wall of the vortex chamber 52. When the diesel engine 11 is started, an electric current is allowed to flow in the heater 54. Thus, the heater 54 generates heat so that the inside portion of the vortex chamber 52 is heated. As a result, fuel can easily be ignited after fuel has been injected into the vortex chamber 52.

After the diesel engine 11 has been started, voltage having a predetermined level is applied to a position between the heater 54 and the cylinder head 17. Since the voltage is applied as described above, an ion current flows between the inner wall of the vortex chamber 52 and the heater 54 by dint of ions generated when fuel has been burnt in the vortex chamber 52 and the combustion chamber 18. In this case, the heater 54 of the glow plug 53 serves as an electrode for detecting the ion current. The glow plug 53 is further provided with an ion-current detection means 53a for detecting the ion current.

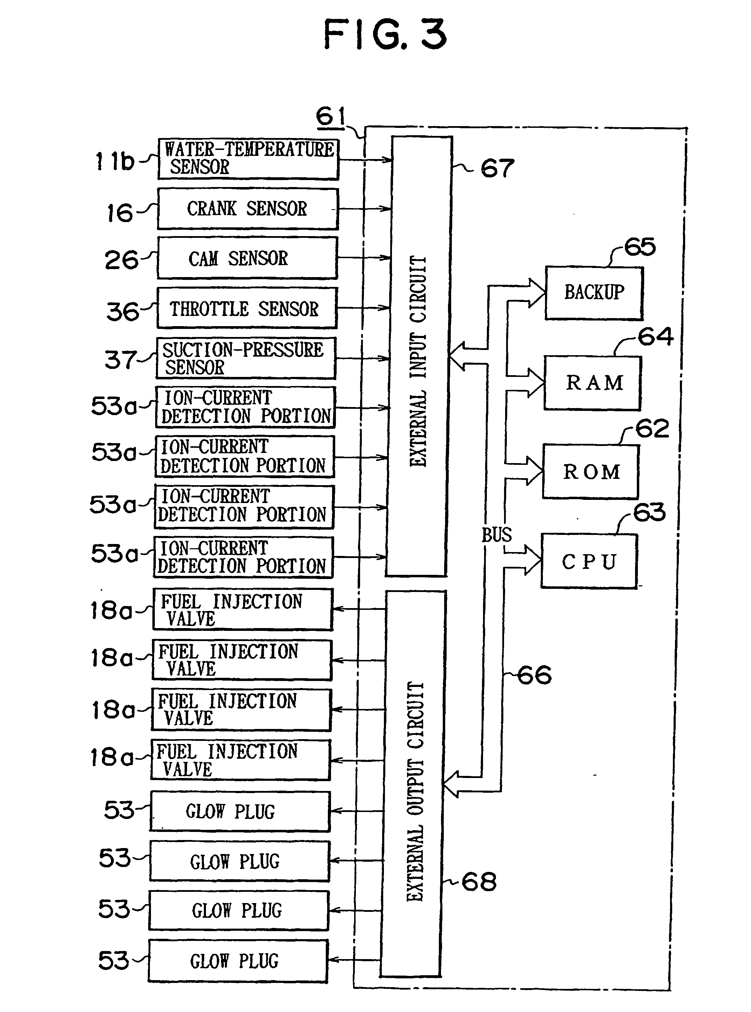

An electrical structure of the combustion state detector according to this embodiment will now be described with reference to Fig. 3.

The combustion state detector according to this embodiment incorporates an electronic control unit (hereinafter called an "ECU") 61 for controlling the operation state of the diesel engine 11. The ECU 61 is formed into a logical operation circuit comprising a ROM 62, a CPU 63, a RAM 64 and a backup RAM 65.

The ROM 62 is a memory in which a map or the like to which reference is made when any one of various control programs is performed. The CPU 63 performs calculations in accordance with the control program and/or the map stored in the ROM 62. The RAM 64 is a memory in which results of calculations performed by the CPU 63 and data and the like supplied from each sensor are temporarily stored. The backup RAM 65 is a nonvolatile memory in which data which must be stored when the revolution of the diesel engine 11 is interrupted are stored. The ROM 62, the CPU 63, the RAM 64 and the backup RAM 65 are connected to one another through a bus 66 and are connected to an external input circuit 67 and an external output circuit 68.

- The water temperature sensor 11b, the crank sensor 16, the cam sensor 26, the throttle sensor 36, the suction-pressure sensor 37 and the ion-current detection means 53a provided for the glow plug 53 of each of the cylinders #1 to #4 are connected to the external input circuit 67. The fuel injection valve 18a of each of the cylinders #1 to #4 and the glow plug 53 of each of the cylinders #1 to #4 are connected to the external output circuit 68.

The ECU 61 operates and controls the fuel injection valve 18a to, at predetermined time, inject fuel into the combustion chamber 18 for a predetermined period during the operation of the diesel engine 11. Injected fuel is ignited in the combustion chamber 18 and burnt because of the ignition. Fuel ignition timing changes corresponding to the fuel injection timing. The fuel ignition period changes corresponding to the fuel injection period. When combustion of fuel has been started because of the foregoing ignition, the ion-current detection means 53a of the glow plug 53 starts transmitting detection signals corresponding to ion currents caused to flow by ions generated because of the combustion of fuel. In a period in which fuel is burnt, the ion-current detection means 53a continues transmission of the detection signals.

In response to the detection signals supplied from the crank sensor 16, the cam sensor 26 and the ion-current detection means 53a of the glow plug 53, the ECU 61 determines actual fuel-ignition timing and actual ignition period in the combustion chamber 18. In accordance with the operation state, including the number of revolutions of the diesel engine 11 and the load of the engine, obtained in response to detection signals supplied from the crank sensor 16 and the suction-pressure sensor 37, the ECU 61 calculates a required fuel ignition timing and a required ignition period. When the required ignition timing and the required ignition period are calculated, reference is made to the known map previously obtained from experiments and stored in the ROM 62.

The ECU 61 controls the fuel injection valve 18a to adjust the fuel injection timing and the fuel injection period such that the actual fuel ignition timing and an ignition period approach the required ignition timing and the required ignition period. Since the actual ignition timing and an ignition period approach the required ignition timing and the required ignition period, a satisfactory operation state of the diesel engine 11 can be maintained.

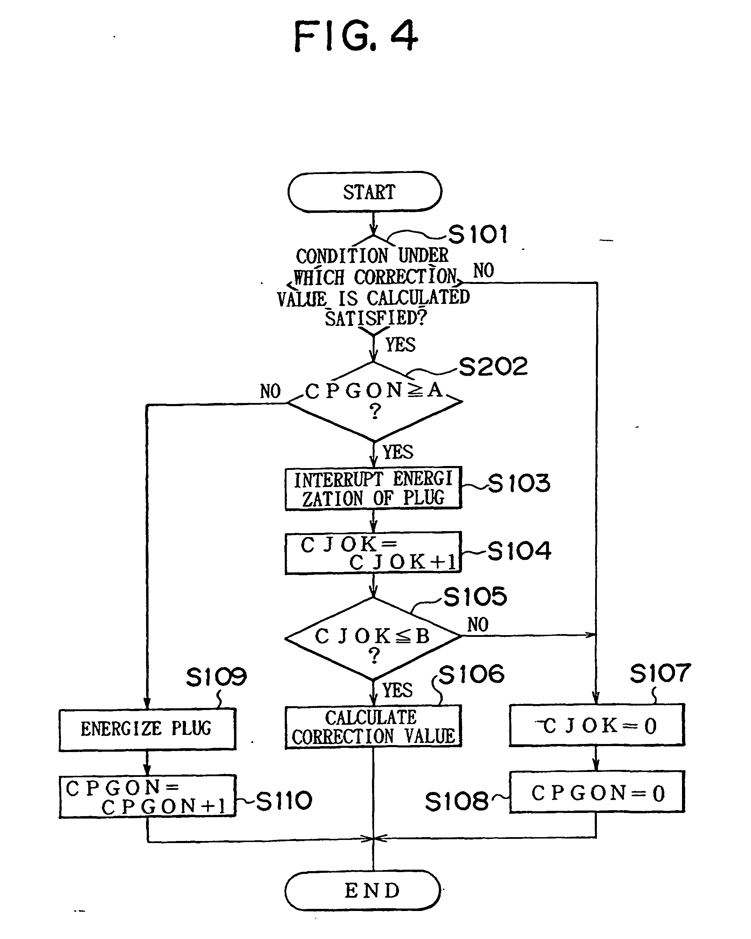

A control operation which is performed by the ECU 61 will now be described with reference to Fig. 4. Fig. 4 is a flow chart of a processing routine for calculating a correction value for use when the fuel injection timing, a fuel injection period and the like are corrected. The foregoing processing routine is performed by the ECU 61 as time interruption which is performed at intervals of, for example, 64 ms.

In step S101 in the processing routine, it is determined by the ECU 61 whether or not a condition under which a correction value is calculated has been satisfied. That is, the ECU 61 detects the temperature of water for cooling the diesel engine 11 in response to a detection signal supplied from the water temperature sensor 11b. Moreover, the ECU 61 detects time elapsed from a moment at which the throttle valve 34 has been fully closed (brought to an idle state) based on a detection signal supplied from the throttle sensor 36. If the temperature of cooling water is not lower than 80°C and time elapsed from the moment at which the idle state has been realized is not shorter than three seconds, the ECU 61 determines that the condition under which the correction value is calculated has been satisfied because the state of the operation of the diesel engine 11 has been stabilized. Thus, the operation proceeds to step S102.

In step S102 it is determined by the ECU 61 whether or not the count counted by an energization counter CPGON is not smaller than a predetermined value A. The count counted by the energization counter CPGON indicates time elapsed from a moment at which the heater 54 of the glow plug 53 has been brought to an energized state. If the relationship CPGON ≥ A is satisfied, the operation proceeds to step S103. If the relationship CPGON ≥ A is not satisfied, the operation proceeds to step S109. Processes from step S103 are performed for the purpose of calculating the correction values, such as the fuel injection timing and fuel injection period, in accordance with an ion current detected by the ion-current detection means 53a of the glow plug 53. Processes from step S109 are performed for the purpose of removing carbon allowed to adhere to the heater 54 of the glow plug 53.

The predetermined value A employed in step S102 is a value by which a time during which an electric current is allowed to flow in the heater 54 is determined in order to remove carbon allowed to adhere to the heater 54 of the glow plug 53. That is, the time during which the heater 54 is energized is changed in proportion to the predetermined value A. The predetermined value A in this embodiment is a value with which carbon allowed to adhere to the heater 54 can sufficiently be heated and removed, and with which the energization time is not elongated excessively.

If it is determined in step S102 that the relationship CPGON ≥ A is not satisfied, the operation proceeds to step S109. In step S109 the ECU 61 supplies an electric current to the heater 54 of the glow plug 53 so that the heater 54 is brought to the energized state. The heater 54 generates heat in the above-mentioned state so that carbon allowed to adhere to the heater 54 is removed. Carbon can efficiently be heated by heat generated by the heater 54 so that carbon is converted into carbon dioxide and thus removed from the heater 54. If carbon allowed to adhere to the heater 54 is removed, passage of a leakage current between the heater 54 and the vortex chamber 52 through the carbon can be prevented. Therefore, it can be prevented that the leakage current is erroneously detected as an ion current.

After the process in step S109 has been performed, the operation proceeds to step S110 so that the ECU 61 increments the energization counter CPGON by "1". Thus, the above-mentioned processing routine is temporarily ended.

If it is determined in step S102 that the relationship CPGON ≥ A is satisfied, the operation proceeds to step S103. The shift from step S102 to step S103 is performed after the energized state of the heater 54 of the glow plug 53 has been maintained for the predetermined time and thus carbon has been removed from the heater 54. In step S103 the ECU 61 interrupts supply of an electric current to the heater 54 of the glow plug 53, so that the heater 54 is brought to a non-energized state. In the foregoing state, voltage of a predetermined level is applied between the heater 54 and the inner wall of the vortex chamber 52. Thus, an ion current is generated between the heater 54 and the inner wall of the vortex chamber 52 by dint of ions generated because of combustion of fuel.

In step S104 the ECU 61 increments a counter CJOK for permitting a calculation of a correction value by "1". The count counted by the counter CJOK for permitting the calculation of the correction value indicates time elapsed from the moment at which carbon has been removed from the heater 54. In step S105 it is determined by the ECU 61 whether or not the count of the counter CJOK for permitting the calculation of the correction value is not larger than a predetermined value B. The predetermined value B is a value by which a period is determined in which detection of the ion current generated upon combustion of fuel is performed. The period for which the detection is performed is in proportion to the predetermined value B. The predetermined value B is determined such that the ion current can accurately be detected and re-adhesion of carbon to the heater 54 can be prevented.

If it is determined that the relationship CJOK ≤ B is satisfied, the operation proceeds to step S106. In step S106 the ECU 61 calculates the correction values, such as the fuel injection timing and the fuel injection period, in accordance with the actual fuel ignition timing and an ignition period obtained in accordance with the ion current or the like, and in accordance with the required ignition timing and the required ignition period obtained from the state of the operation of the diesel engine 11. When the correction values are calculated, reference is made to the known map previously obtained from the experiments and stored in the ROM 62. The ECU 61 stores the obtained correction values in the RAM 64, and then temporarily completes the above-mentioned processing routine.

The ECU 61 uses the obtained correction values to correct the fuel injection timing and the fuel injection period. Since the fuel injection timing and the fuel injection period are corrected as described above, the actual fuel ignition timing and an ignition period in the combustion chamber 18 are allowed to approach the required ignition timing and the required ignition period. Thus, a satisfactory state of the operation of the diesel engine 11 can be maintained.

If it is determined in step S105 that the relationship CJOK ≤ B is not satisfied, the operation sequentially proceeds to steps 107 and S108. In step S107 the ECU 61 resets the counter CJOK for permitting the calculation of the correction value to zero. In step S108 the ECU 61 resets the energization counter CPGON to zero. After steps S107 and S108 have sequentially be performed, the ECU 61 temporarily completes the foregoing processing routine.

- Also in a case where a negative determination is made in step S101 because of depression of the accelerator pedal 35 to terminate the idling state of the diesel engine 11, the operation proceeds to steps S107 and S108 so that the counter CJOK for permitting the calculation of the correction value and the energization counter CPGON are reset to zero.

This embodiment encounters adhesion of carbon generated because of combustion of fuel to the heater 54 of the glow plug 53 for detecting an ion current generated by dint of ions when combustion of fuel is performed. Since carbon is heated so as to be formed into carbon dioxide, carbon can be removed from the heater 54. Therefore, no leakage current flows between the heater 54 and the inner wall of the vortex chamber 52 through carbon. As a result, the leakage current is not erroneously detected as an ion current. Since the erroneous detection of the leakage current as the ion current can be prevented, appropriate correction values for correcting the fuel injection timing and the fuel injection period can be obtained in accordance with the ion current. As a result, a satisfactory state of combustion can be maintained in the combustion chamber 18. Thus, a satisfactory state of operation can be maintained in the diesel engine 11.

Since carbon allowed to adhere to the heater 54 is heated with heat of the heater 54, carbon can efficiently be heated and quickly be formed into carbon dioxide so as to be removed from the heater 54.

Even if carbon allowed to adhere to the heater 54 of the glow plug 53 is removed, carbon is again allowed to adhere to the heater 54 during the combustion of fuel. This embodiment has the structure that the detection of the ion current is performed after carbon has been removed from the heater 54 only in a period from a moment at which the count of the counter CJOK for permitting the calculation of the correction value is made to be "1" to a moment at which the same is made to be the predetermined value B. Therefore, erroneous detection of the leakage current generated by dint of carbon allowed to adhere to the heater 54 after carbon has been removed as an ion current can be prevented.

This embodiment has the structure that only when the condition under which a correction value is calculated is satisfied, e. g. the temperature of cooling water is not lower than 80°C and time elapsed from start of idling is not shorter than three seconds, the heater 54 of the glow plug 53 is brought to the energized state to remove the carbon. Therefore, excessive energization of the heater 54 which causes the heater 54 to prematurely deteriorate can be prevented.

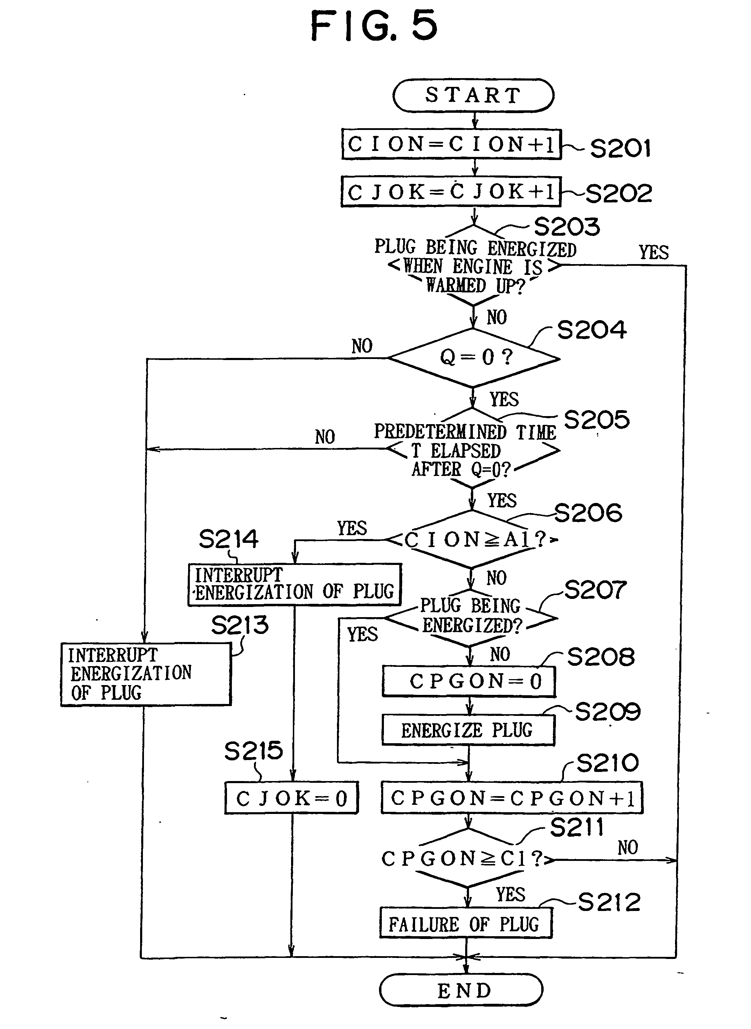

A second embodiment of the present invention will now be described with reference to Figs. 5 to 7. This embodiment is different from the first embodiment in only the processing routine which is performed by the ECU 61. Therefore, the same processes as those according to the first embodiment are omitted from detailed description.

Fig. 5 is a flow chart of a process for removing carbon from the heater 54 of the glow plug 53 and a process for determining a failure of the glow plug 53. The processing routine shown in Fig. 5 is performed by the ECU 61 as time interruption which is performed at intervals of, for example, 64 ms.

In accordance with the above-mentioned processing routine, the ECU 61 increments a counter CION for measuring time for which no electric current is generated by "1" in step S201. The counter CION for measuring time for which no electric current is generated is arranged to measure time for which the leakage current or the ion current is not generated.

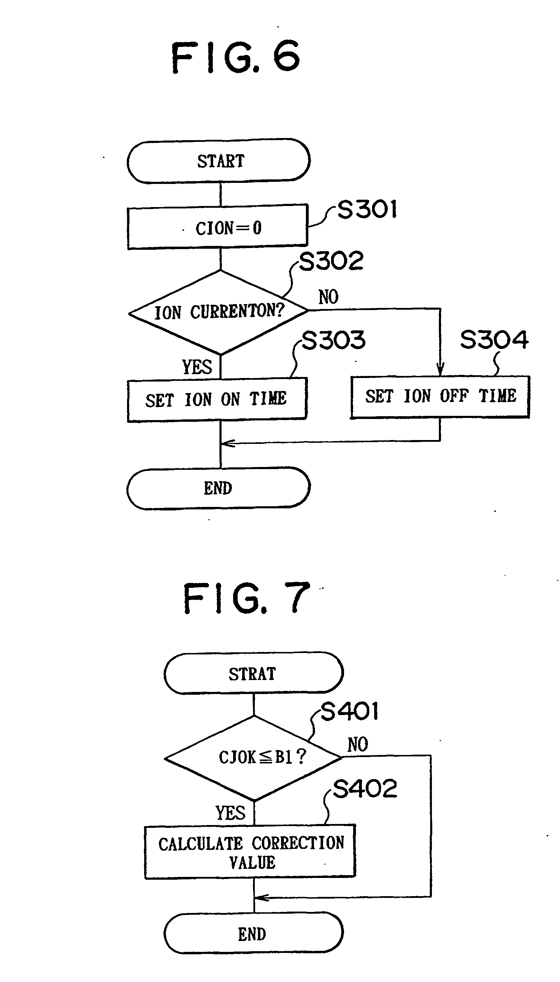

A process for storing time at which generation of the ion current has been generated and time at which the generation is completed will now be described with reference to a flow chart shown in Fig. 6. The processing routine shown in Fig. 6 is performed by the ECU 61 as interruption which is performed whenever a leakage current or an ion current is detected.

In accordance with the processing routine, the ECU 61 resets, to zero, the counter CION for measuring time for which no electric current is generated in step S301. Since the process in step S301 is performed as described above, the counter CION for measuring time for which no electric current is generated is reset whenever a leakage current or an ion current is generated. The count counted by the counter CION indicates time for which a leakage current or an ion current is not generated.

In step S302 it is determined by the ECU 61 whether or not an ion current is being generated. If it is determined in step S302 that an ion current is being generated, the operation proceeds to step S303. Then, present time at which the ion current has first been generated is stored in the RAM 64 as start time of generation of the ion current. If it is determined in step S302 that no ion current is not being generated, the present time is stored in step S304 in the RAM 64 as time at which generation of the ion current has been completed. After the processes in step S303 or S304 has been completed, the ECU 61 temporarily completes the foregoing processing routine.

Referring back to the processing routine for removing carbon and determining a failure shown in Fig. 5, the counter CION for measuring time for which no electric current is generated is incremented by "1" in step S201. Then, the operation proceeds to step S202. In step S202 the ECU 61 increments, by "1", the count of the counter CJOK for permitting the calculation of the correction value.

Then, the operation proceeds to step S203 so that it is determined by the ECU 61 whether or not the diesel engine 11 is being warmed up in accordance with the temperature of water for cooling the diesel engine 11. If the diesel engine 11 is being warmed and the temperature of the cooling water is low, the heater 54 of the glow plug 53 is energized. Thus, the inside portion of the vortex chamber 52 is heated. Therefore, if the diesel engine 11 is being warmed up, it is determined that the heater 54 of the glow plug 53 is being energized. Thus, the ECU 61 temporarily completes the processing routine. If the diesel engine 11 is not being warmed up, it is determined that the heater 54 is not being energized. Thus, the operation proceeds to step S204.

In step S204, it is determined by the ECU 61 whether or - not the amount Q of injected fuel is zero. A condition under which an automobile is driven such that the relationship Q = 0 is satisfied is, for example, a case in which a driver makes the amount of depression of the accelerator pedal 35 to be zero when the vehicle drives a downhill or when the vehicle is decelerated. If it is determined in step S204 that the relationship Q = 0 is not satisfied, the operation proceeds to step S213. If it is determined in step S204 that the relationship Q = 0 is satisfied, the operation proceeds to step S205.

In step S205, it is determined by the ECU 61 whether or not predetermined time T has elapsed from a moment at which the relationship Q = 0 has been satisfied. If a negative determination is made in step S205, the operation proceeds to step S213. When the operation proceeds from step S205 or step S204 to step S213, the ECU 61 brings the heater 54 to a non-energized state in step S213 if the heater 54 of the glow plug 53 has been energized for the purpose of removing carbon. Then, the ECU 61 temporarily completes the processing routine.

If an affirmative determination is made in step S205, the operation proceeds to step S206. A fact that the operation proceeds from step S205 to step S206 means a fact that predetermined time T has elapsed from a moment at which the quantity Q of injected fuel has been made to be zero. When the predetermined time T elapses, no ion current is generally generated in the predetermined time T. Therefore, the counter CION for measuring a time during which no electric current is generated is not reset to zero. If a leakage current flows because carbon has been allowed to adhere to the heater 54 of the glow plug 53, the leakage current is erroneously detected as an ion current. In this case, the counter CION for measuring time during which no electric current is generated is reset to zero.

In step S206 it is determined by the ECU 61 whether or not the count counted by the counter CION for measuring a time during which no electric current is generated is not smaller than a predetermined value A1. The predetermined value A1 is a value by which a time, required from the moment at which the count of the counter CION has been made to be zero to the moment at which the count is made the predetermined value A1, is made to be the same as the predetermined time T. Therefore, if it is determined in step S206 that the relationship CION ≥ A1 is satisfied, the counter CION for measuring time for which no electric current is generated has not been reset because of a leakage current. Thus, the operation proceeds to step S214. If it is determined in step S206 that the relationship CION ≥ A1 is not satisfied, the counter CION for measuring a time during which no electric current is generated has been reset by dint of a leakage current. Thus, the operation proceeds to step S207.

If the operation proceeds from step S206 to step S214, the ECU 61 brings the heater 54 to a non-energized state in step S214 in a case where the heater 54 of the glow plug 53 for removing carbon is in the energized state. In step S215 the ECU 61 resets the counter CJOK for permitting the calculation of the correction value to zero. Since the counter CJOK for permitting the calculation of the correction value is frequently reset if no leakage current is generated by dint of carbon allowed to adhere to the electrode portion, the count counted by the counter CJOK for permitting the calculation of the correction value is not excessively enlarged.

A process for calculating correction values for correcting the fuel injection timing and the fuel injection period will now be described with reference to a flow chart shown in Fig. 7. The processing routine shown in Fig. 7 is performed by the ECU 61 as time interruption which is performed at intervals of, for example, 64 ms.

In accordance with the foregoing processing routine, it is determined by the ECU 61 whether or not the counter CJOK for permitting the calculation of the correction value is not larger than a predetermined value B1. The predetermined value B1 is a value by which a time during which an ion current is detected is determined. The time during which the detection is performed is in proportion to the predetermined value B1. The predetermined value B1 according to this embodiment is a value with which the ion current can accurately be detected and which prevents detection of the ion current for excessively long time.

If it is determined that the relationship CJOK ≤ B1 is not satisfied, the ECU 61 temporarily completes the above-mentioned processing routine. If it is determined that the relationship CJOK ≤ B1 is satisfied, the operation proceeds to step S402. In step S402 the ECU 61 obtains actual fuel ignition timing and an ignition period in accordance with the time at which the ion current has been started and time at which the generation has been terminated which have been stored in the RAM 64. The ECU 61 calculates the correction values, such as the fuel injection timing and the fuel injection period, in accordance with the thus-obtained actual ignition timing and an ignition period and the required ignition timing and required ignition period obtained from a state of the operation of the diesel engine 11. When the correction values are calculated, reference to the known map obtained from experiments and stored in the ROM 62 is made. The ECU 61 stores the obtained correction values in the RAM 64, and then temporarily terminates the processing routine.

The ECU 61 uses the obtained correction values to correct the fuel injection timing and the fuel injection period. Since the fuel injection timing and the fuel injection period are corrected as described above, the actual fuel ignition timing and an ignition period in the combustion chamber 18 can be allowed to approach the required ignition timing and the required ignition period. As a result, a satisfactory state of the operation of the diesel engine 11 can be maintained.

Referring back to the processing routine shown in Fig. 5 and arranged to remove carbon and determine a failure, a process which must be performed if it is determined in step S206 that CION ≥ A1 is not satisfied and thus the operation proceeds to step S207 will now be described. A fact that the operation proceeds to step S207 means a fact that a leakage current has been generated by dint of carbon allowed to adhere to the heater 54 of the glow plug 53 and thus the counter CION for measuring time for which no electric current is generated has been reset to zero by dint of the leakage current.

In step S207 it is determined by the ECU 61 whether or not the heater 54 is in the energized state for the purpose of removing carbon. If the heater 54 is being energized, the operation proceeds to step S210. If the heater 54 is not being energized, the operation proceeds to step S208. In step S208 the ECU 61 resets the energization counter CPGON for a detecting time during which the heater 54 is energized to zero. In step S209 the ECU 61 supplies an electric current to the heater 54 so as to heat and remove carbon allowed to adhere to the heater 54. In step S210 the ECU 61 increments the energization counter CPGON by "1". In step S211 it is determined by the ECU 61 whether or not the count of the energization counter CPGON is not smaller than a predetermined value C1.

The energization counter CPGON brings the heater 54 to an energized state for the purpose of removing carbon. Then, the counting operation of the energization counter CPGON is interrupted because carbon has been removed. That is, when carbon has been removed from the heater 54, any leakage current generated by dint of carbon does not flow. Therefore, the counter CION for measuring time for which no electric current is generated is not reset to zero. Thus, it is determined in step S206 that the relationship CION ≥ A1 is satisfied. When it is determined that the relationship CION ≥ A1 is satisfied, the operation proceeds to step S214. Therefore, the count of the energization counter CPGON is not incremented in step S210. Note that the heater 54 is brought to the non-energized state when the operation has proceeded to step S214.

If carbon is again allowed to adhere to the heater 54 and thus a leakage current flows after carbon has been removed from the heater 54 and the count of the energization counter CPGON has been interrupted, the counter CION for measuring a time during which no electric current is generated is reset to zero whenever a leakage current is generated. As a result, it is determined in step S206 that the relationship CION ≥ A1 is not satisfied. Moreover, the energization counter CPGON is reset to zero in step S208. Therefore, if the count of the energization counter CPGON is enlarged excessively, it can be determined that a failure of the glow plug 53 has occurred.

The determination whether or not CPGON ≥ C1 is satisfied is performed in step S211 to determine a failure of the glow plug 53. A criterion of the determination is made to be rigorous or relaxed in accordance with the predetermined value C1. That is, the criterion of the determination of a failure is relaxed as the predetermined value C1 is enlarged, while the same is made to be rigorous as the predetermined value C1 is reduced. The predetermined value C1 according to this embodiment is a value by which a failure of the glow plug 53 can accurately be detected and the criterion of the determination of the failure is not made to be excessively rigorous.

If it is determined in step S211 that the relationship CPGON ≥ C1 is not satisfied, the ECU 61 temporarily completes the foregoing processing routine. If it is determined in step S211 that the relationship CPGON ≥ C1 is satisfied, the operation proceeds to step S212 so that it is determined that a failure of the glow plug 53 has occurred. If it is determined that a failure of the glow plug 53 has occurred, the ECU 61 sets, for example "1" as a failure determination flag to the backup RAM 65. If the failure determination flag is set to be "1", a failure of the glow plug 53 can accurately be detected by reading the flag from the backup RAM 65 when, for example, the maintenance of the automobile is performed. After the process in step S212 has been performed, the ECU 61 temporarily completes the above-mentioned processing routine.

This embodiment arranged as described above attains the following effects in addition to the effects obtainable from the first embodiment.

This embodiment has the structure that only when a leakage current generated by dint of carbon allowed to adhere to the heater 54 of the glow plug 53 has been erroneously detected as an ion current, the heater 54 is energized so as to remove carbon. Therefore, excessive energization of the heater 54 which is performed to remove carbon and which causes the heater 54 to prematurely deteriorate can be prevented.

Moreover, this embodiment has the structure that the detection of an ion current is performed after carbon has been removed from the heater 54 i. e. the detection is performed in only a period from the moment at which the count of the counter CJOK for permitting the calculation of the correction value has been made to be 1 to the moment at which the same has been made to be the predetermined value B1. Therefore, an erroneous determination that a leakage current generated by dint of carbon allowed to adhere to the heater 54 from which carbon has been removed as an ion current can be prevented.

In general, when an automobile is driven on a downhill or decelerated, the amount Q of injected fuel is made to be zero and thus a state in which fuel supply is interrupted is realized. Since fuel is not burnt in the combustion chamber 18 in the foregoing state in which fuel supply is interrupted, no ion current is generated in general. If carbon is allowed to adhere to the heater 54 of the glow plug 53, carbon causes a leakage current to flow. Thus, the leakage current is erroneously detected as an ion current. In this embodiment, it is determined that carbon is allowed to adhere to the heater 54 only when a leakage current is erroneously detected as an ion current in a state in which fuel supply is interrupted and in which no ion current is to be generated. Thus, the heater 54 is energized so that carbon is removed. Therefore, excessive removal of carbon by energizing the heater 54 and premature deterioration of the heater 54 can be prevented.

If, for example, the heater 54 is not energized because of a failure of the glow plug 53, the energized state of the heater 54 is maintained though removal of carbon has been completed. Therefore, a state similar to that in which leakage currents are continuously detected as ion currents is realized. If the above-mentioned state is realized, the processes in steps S211, S212 are performed so that the failure of the glow plug 53 can accurately be determined.

The second embodiment may be structured such that the processes in steps S211, S212 are not performed to omit the determination of a failure of the glow plug 53. In this case, the control load which must be borne by the ECU 61 can be reduced because the processes in steps S211, S212 are omitted.

The second embodiment has the structure that only when a leakage current generated by dint of carbon allowed to adhere to the heater 54 is erroneously detected as an ion current, the heater 54 is energized to remove carbon. The present invention is not limited to the foregoing structure. For example, removal of carbon by energizing the heater 54 may be performed at predetermined intervals regardless of existence of a leakage current.

Each of the foregoing embodiments may be structured such that the predetermined values B and B1 in corresponding steps S105 and S401 are changed arbitrarily to arbitrarily vary the time during which an ion current is detected.

Each of the foregoing embodiments has the structure that the heater 54 also having a function to serve as an electrode for detecting an ion current is heated to remove carbon allowed to adhere to the heater 54. However, the present invention is not limited to the foregoing structure. For example, a structure may be employed in which an electrode for detecting an ion current is provided individually from the heater 54. Moreover, carbon allowed to adhere to the electrode is removed by energizing the heater 54. If the present invention is applied to a gasoline engine in place of the diesel engine 11, an electrode of an ignition plug of the gasoline engine may be used as the electrode for detecting an ion current.

A combustion state detector for an internal combustion engine which is capable of accurately detecting a combustion state, such as fuel ignition timing and an ignition period in a combustion chamber is disclosed, the combustion state detector incorporating, in a diesel engine 11, a fuel injection valve 18a for injecting fuel into a combustion chamber 18 of the diesel engine 11 and a glow plug 53 for detecting an ion current generated because of combustion of fuel in the combustion chamber 18. The glow plug 53 has a heater 54 also having a function to serve as an electrode for detecting an ion current. In accordance with the ion current detected by the glow plug 53, a fuel combustion state in the combustion chamber 18 is detected. If carbon is allowed to adhere to the heater 54 of the glow plug 53 because of combustion of fuel, there is apprehension that a leakage current flows through carbon and the leakage current is erroneously detected as an ion current. In this case, the heater 54 is heated so as to remove carbon so that detection of a combustion state is accurately performed.

## Claims

1. A combustion state detector for an internal combustion engine (11) incorporating an electrode portion (54) allowed to appear in a combustion chamber (18) of an internal combustion engine (11) and ion-current detection means (53a) for detecting an ion current generated by dint of ions generated because of combustion in a combustion chamber (18) so that a combustion state in said combustion chamber (18) is detected in accordance with the ion current detected by said ion-current detection means (53a), said combustion state detector for an internal combustion engine (11) comprising:
carbon removal means (61) for removing carbon allowed to adhere to said electrode portion (54) of said ion-current detection means (53a);
**characterized by**
limiting means (61) for limiting detection of the ion current which is performed by said ion-current detection means (53a) to predetermined period after carbon has been removed by said carbon removal means (61), wherein the ion current detection period is limited to a predetermined period in which carbon does not adhere again after carbon has been removed.

2. A combustion state detector for an internal combustion engine (11) according to Claim 1, wherein
said carbon removal means (61) heats and removes carbon allowed to adhere to said electrode portion (54).

3. A combustion state detector for an internal combustion engine (11) according to Claim 2, wherein
said carbon removal means (61) causes said electrode portion (54) to be heated so that carbon is heated and removed.

4. A combustion state detector for an internal combustion engine (11) according to any one of claims 1 to 3, wherein a heater (54) of a glow plug (53) serves as the electrode portion (54) for detecting the ion-current.

5. A combustion state detector for an internal combustion engine (11) according to any one of the preceding claims 1 to 3, wherein an electrode of an ignition plug of gasoline engine is used as said electrode portion (54) for detecting the ion-current.

## Patentansprüche

1. Erfassungsvorrichtung für den Verbrennungszustand in einer Brennkraftmaschine (11) mit einem in einer Verbrennungskammer (18) einer Brennkraftmaschine (11) angeordneten Elektrodenteil (54) und einer Ionenstromerfassungseinrichtung (53a) zur Erfassung eines Ionenstroms, der durch die Ionen bei der Verbrennung in einer Verbrennungskammer (18) erzeugt wird, sodass der Verbrennungszustand in der Verbrennungskammer (18) entsprechend dem mittels der Ionenerfassungseinrichtung (53a) erfaßten Ionenstrom erfaßt wird, wobei die Erfassungsvorrichtung der Brennkraftmaschine (11) eine Kohlenstoffentfernungseinrichtung (61) zum Entfernen von an dem Elektrodenteil (54) der Ionenstromerfassungseinrichtung (53a) anhaftenden Kohlenstoffs aufweist,
**gekennzeichnet durch**
eine Begrenzungseinrichtung (61) zur Begrenzung der Erfassung des Ionenstroms, die mittels der Ionenstromerfassungseinrichtung (53a) für eine bestimmte Zeitdauer, nachdem der Kohlenstoff mittels der Kohlenstoffentfernungseinrichtung (61) entfernt wurde, durchgeführt wird, wobei die Ionenstromerfassungszeitdauer auf eine bestimmte Zeitdauer begrenzt ist, in der Kohlenstoff nicht erneut anhaftet, nachdem der Kohlenstoff entfernt wurde.

2. Erfassungsvorrichtung für den Verbrennungszustand einer Brennkraftmaschine (11) nach Anspruch 1, wobei die Kohlenstoffentfernungseinrichtung (61) den an dem Elektrodenteil (54) haftenden Kohlenstoff erhitzt und entfernt.

3. Erfassungsvorrichtung für den Verbrennungszustand in einer Brennkraftmaschine (11) nach Anspruch 2, wobei die Kohlenstoffentfernungseinrichtung (61) bewirkt, dass das Elektrodenteil (54) erhitzt wird, sodass der Kohlenstoff erhitzt und entfernt wird.

4. Erfassungsvorrichtung für den Verbrennungszustand in einer Brennkraftmaschine (11) nach einem der Ansprüche 1 bis 3, wobei eine Heizeinrichtung (54) einer Glühkerze (53) als Elektrodenteil (54) zur Erfassung des Ionenstroms dient.

5. Erfassungsvorrichtung für den Verbrennungszustand in einer Brennkraftmaschine (11) nach einem der Ansprüche 1 bis 3, wobei eine Elektrode einer Zündkerze eines Benzinmotors als Elektrodenteil (54) zur Erfassung des Ionenstroms dient.

## Revendications

1. Dispositif de détection de l'état de combustion pour un moteur à combustion interne (11) incorporant une partie d'électrode (54) autorisée à apparaître dans une chambre de combustion (18) d'un moteur à combustion interne (11) et un moyen de détection de courant ionique (53a) destiné à détecter un courant ionique généré grâce aux ions générés en raison de la combustion dans une chambre de combustion (18) de sorte qu'un état de combustion dans ladite chambre de combustion (18) est détecté conformément au courant ionique détecté par ledit moyen de détection de courant ionique (53a), ledit dispositif de détection d'état de combustion pour un moteur à combustion interne (11) comprenant :
un moyen de suppression du carbone (61) destiné à supprimer le carbone autorisé à adhérer à ladite partie d'électrode (54) dudit moyen de détection de courant ionique (53a) ;
**caractérisé par**
un moyen de limitation (61) destiné à limiter la détection du courant ionique qui est réalisée par ledit moyen de détection de courant ionique (53a) à une période prédéterminée après que le carbone ait été supprimé par ledit moyen de suppression de carbone (61), dans lequel la période de détection de courant ionique est limitée à une période prédéterminée pendant laquelle le carbone n'adhère pas à nouveau après que le carbone ait été supprimé.

2. Dispositif de détection de l'état de combustion pour un moteur à combustion interne (11) selon la revendication 1, dans lequel
ledit moyen de suppression de carbone (61) chauffe et supprime le carbone autorisé à adhérer à ladite partie d'électrode (54).

3. Dispositif de détection d'état de combustion pour un moteur à combustion interne (11) selon la revendication 2, dans lequel
ledit moyen de suppression de carbone (61) amène ladite partie d'électrode (54) à chauffer de sorte que le carbone est chauffé et supprimé.

4. Dispositif de détection d'état de combustion pour un moteur à combustion interne (11) selon l'une quelconque des revendications 1 à 3, dans lequel un dispositif de chauffage (54) d'une bougie de préchauffage (53) sert de partie d'électrode (54) destinée à détecter le courant ionique.

5. Dispositif de détection d'état de combustion pour un moteur à combustion interne (11) selon l'une quelconque des revendications précédentes 1 à 3, dans lequel une électrode d'une bougie d'allumage d'un moteur à essence est utilisée en tant que ladite partie d'électrode (54) destinée à détecter le courant ionique.
